# EUROPEAN PATENT APPLICATION

(11) **EP 1 114 854 A1**
(43) Date of publication of application: **11.07.2001**
(21) Application number: 00905371.1
(22) Date of filing: 25.02.2000
(51) Int. Cl.: C09J 175/04, C09J 7/02, D06M 17/10, B32B 5/02, B32B 27/12

(54) **REACTIVE HOT-MELT ADHESIVE AND USE THEREOF**

(30) Priority: 26.02.1999 JP 4981999
(71) Applicant: ASAHI GLASS COMPANY LTD., Tokyo 100-8405 (JP); JAPAN GORE-TEX, INC., Setagaya-ku Tokyo 156 (JP)
(72) Inventor: NOMI, Haruo Japan Gore-Tex Inc., Tokyo 156-8505 (JP); TADA, Masako Asahi Glass Company, Limited, Kawasaki-shi Kanagawa 210-0924 (JP); YAMADA, Eriko Asahi Glass Company, Limited, Kawasaki-shi Kanagawa 210-0924 (JP)
(74) Representative: Müller-Boré & Partner Patentanwälte
(86) International application number: JP0001128
(87) International publication number: WO0050529

(57) **Abstract**

The present invention provides a reactive hot melt adhesive which is excellent in storage stability, initial bonding property and heat resistance after bonding and curing and which can be formed into various shapes, and a composite adhesive sheet employing it.

The present invention is a reactive hot melt adhesive containing, as the main component, a blocked urethane prepolymer made by reacting a linear urethane prepolymer having isocyanate groups with an aliphatic monoalcohol (A) having a hydroxyl number of from 200 to 560, a blocking agent (B) which is a compound other than (A), and, optionally, a low molecular weight diol having a hydroxyl number of higher than 400.

## Description

### TECHNICAL FIELD

The present invention relates to a urethane-type reactive hot melt adhesive which undergoes dissociation of blocking agent at a relatively low temperature and can be processed by extrusion. Further, it relates to an adhesive composite sheet or tape material employing the reactive hot melt adhesive, a method of using it, and a sewn product wherein it is used.

### BACKGROUND ART

Conventional adhesives may, for example, be of a solvent type, a hot melt type or a reaction type.

The hot melt type adhesive does not require a solvent and thus is ecologically good. Further, the bonding completes upon curing by cooling. Thus it has an advantage that the initial bonding is quick. Accordingly, its demand is increasing. However, its base material is a thermoplastic resin, and there is a problem that it is poor in heat resistance, bonding strength and chemical resistance.

The reaction type adhesive has high bonding strength and is excellent in heat resistance, as it undergoes crosslinking after bonding. However, it takes a relatively long time for the reaction for curing, and the bonding strength immediately after bonding as of the hot melt type adhesive can not be attained.

A reactive hot melt adhesive was proposed, as an adhesive having the operation efficiency and high initial bonding strength of the hot melt type adhesion, and the high heat resistance and high bonding strength of the reaction type adhesive simultaneously. A urethane prepolymer having isocyanate groups at the ends is used for the reactive hot melt adhesive. As it has a crosslinking property, it is excellent in heat resistance and chemical resistance, and further, the bonding strength is good. However, it has poor storage stability and is likely to react with water in the air. Therefore, it is required to be stored in a sealed container, and there are problems also in its handling during use.

It was attempted to improve the storage stability by blocking isocyanate groups of a urethane polymer, as disclosed in JP-A-62-138573 and JP-A-4-253785. However, there were the following drawbacks.

Namely, JP-A-4-253785 discloses a method in which a melt of an adhesive which is block-dissociated by heat melting during use, is coated on a base material, followed by bonding with another base material. However, it is necessary to bond with another base material immediately after the melt of the block-dissociated adhesive is coated on the base material, and there is a drawback that once the adhesive is coated on the base material, it can not be stored as it is.

Further, JP-A-62-138573 discloses a method in which a liquid adhesive synthesized by one shot method is coated by spraying on a base material to form a coating film of the adhesive, followed by press bonding and then by heating for block dissociation and bonding. It is possible to store the adhesive coating film as it has been formed initially, and at the time of bonding, it is subjected to heating for the block-dissociation and bonding. However, there was a drawback from the nature of the adhesive that the processable form was limited to the form of a film fixed on a base material. Further, there was a drawback with the spray coating method that it was difficult to make the film thickness uniform.

### DISCLOSURE OF THE INVENTION

The present invention is the following invention which overcomes the drawbacks of the above-described prior art and which has an object to provide an adhesive whereby the adhesive layer can easily be made uniform, and working efficiency at the working site can be improved and which further has a good storage property.

A reactive hot melt adhesive containing, as the main component, a blocked urethane prepolymer made by reacting a linear urethane prepolymer having isocyanate groups with an aliphatic monoalcohol (A) having a hydroxyl number of from 200 to 560 and a blocking agent (B) which is a compound other than (A).

A reactive hot melt adhesive containing, as the main component, a blocked urethane prepolymer made by reacting a linear urethane prepolymer having isocyanate groups with a low molecular weight diol having a hydroxyl number of higher than 400, an aliphatic monoalcohol (A) having a hydroxyl number of from 200 to 560 and a blocking agent (B) which is a compound other than (A).

An adhesive composite sheet or tape material made by laminating an adhesive layer made of the reactive hot melt adhesive and a moisture permeable waterproof sheet.

A method of using the adhesive composite sheet or tape material for a material for sealing a seam portion of a sewn product made of a moisture permeable waterproof sheet, or for sealing a mending portion of a sewn product made of a moisture permeable waterproof sheet, and a sewn product employing it.

### BRIEF DESCRIPTION OF THE DRAWING

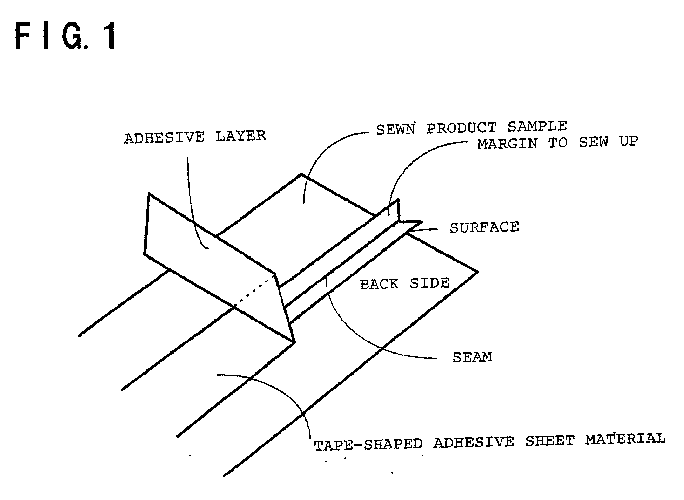

Figure 1 is an illustrative view showing a sealed sample.

### BEST MODE FOR CARRYING OUT THE INVENTION

### Urethane prepolymer

The linear urethane prepolymer having isocyanate groups in the present invention preferably has isocyanate groups at terminals of the linear structure. The linear urethane prepolymer can be prepared by using bifunctional materials, as will be described below.

### Organic diisocyanate

The organic diisocyanate which can be used in the present invention may, for example, be an aromatic diisocyanate such as 4,4'-diphenylmethane diisocyanate (MDI), tolylene diisocyanate (TDI), or xylene diisocyanate (XDI), an aliphatic diisocyanate such as hexamethylene diisocyanate, or an alicyclic diisocyanate such as isophorone diisocyanate, or hydrogenated MDI (H₁₂MDI).

### High molecular weight diol having a hydroxyl number of from 40 to 400

As the high molecular weight diol having a hydroxyl number of from 40 to 400 to be used in the present invention, e.g. polyester diol, polyether diol, polylactone type diol or polycarbonate type diol is preferred.

The polyester diol is preferably a polyester diol obtained by reacting a dicarboxylic acid and a low molecular weight diol. As the dicarboxylic acid, e.g. phthalic acid, isophthalic acid, terephthalic acid, succinic acid, adipic acid, suberic acid or sebacic acid may be mentioned. As the low molecular weight diol, e.g. ethylene glycol, diethylene glycol, 1,3-propane diol, 1,4-butane diol, 1,5-pentane diol or 1,6-hexane diol may be mentioned.

As the polyether polyol, e.g. polyoxyethylene glycol, polyoxypropylene glycol, polyoxyethylene oxypropylene glycol, or polyoxytetramethylene glycol may be mentioned.

As the polylactone type diol, e.g. polycaprolactone glycol, polyvalerolactone glycol or polypropiolactone glycol, which can be obtained by ring-opening polymerization of various lactones, may be mentioned.

As the polycarbonate type diol, one obtained by condensation of a low molecular weight glycol such as ethylene glycol, propylene glycol, 1,4-butane diol or 1,6-hexane diol, with e.g. ethylene carbonate, diethyl carbonate or diphenyl carbonate, may be mentioned.

The hydroxyl number is preferably from 40 to 190, particularly preferably from 50 to 120.

### Low molecular weight diol having a hydroxyl number of higher than 400

The low molecular weight diol having a hydroxyl number of higher than 400 to be used in the present invention, as the case requires, is preferably a compound having a hydroxyl number of from 560 to 2000, and it may, for example, be ethylene glycol, diethylene glycol, 1,3-propane diol, 1,4-butane diol, 1,5-pentane diol or 1,6-hexane diol.

### Aliphatic monoalcohol (A) having a hydroxyl number of from 200 to 560

The aliphatic monoalcohol (A) having a hydroxyl number of from 200 to 560, to be used in the present invention, may, specifically, be, for example, n-hexyl alcohol, n-heptyl alcohol, n-octyl alcohol or n-decyl alcohol, or an isomer thereof such as 2-ethyl-1-hexyl alcohol or 2-methyl-dodecyl alcohol. A C₆₋₁₈ linear or branched saturated aliphatic monoalcohol is preferred.

A monool having a hydroxyl number exceeding 560 is likely to be readily dissociated during heating, and a monool having a hydroxyl number less than 200 is not desirable, since it tends to bring about deterioration of the physical properties of the resulting adhesive.

In the present invention, if only the blocking agent (B) is used without using the monoalcohol (A), at the time of heat melting of the reactive hot melt adhesive of the present invention for bonding, a polyisocyanate is likely to be discharged in the atmosphere, whereby it may be required to provide an environmental installation such as a local exhaust ventilation. By the combined use of the monoalcohol (A) together with the blocking agent (B) in the present invention, it is effective to reduce the amount of a polyisocyanate discharged in the atmosphere at the time of heat melting the reactive hot melt adhesive.

### Blocking agent (B)

In the present invention, a blocking agent (B) which is a compound other than (A) is used.

As the blocking agent (B), compounds which are known as blocking agents and which are other than (A), can be used.

Specifically, it may, for example, be a phenol blocking agent such as phenol, cresol, nitrophenol, chlorophenol, ethylphenol or phenylphenol, a lactam blocking agent such as ε -caprolactam, an oxime blocking agent such as acetaldoxime, acetoxime, methyl ethyl ketoxime, 2,3-butanedione mono oxime or cyclohexanone oxime, an alcohol blocking agent such as methanol, ethanol, 1-butanol, 1-propanol, 2-propanol, 1-pentanol, benzyl alcohol, methoxymethanol, 2-chloroethanol, 1-chloro-2-propanol or 1,3-dichloro-2-propanol, and another blocking agent such as acetylacetone, ethyl acetoacetate or diethyl malonate.

A low molecular weight blocking agent, such as phenol, ε -caprolactam, methyl ethyl ketoxime, methanol, ethanol, 1-propanol or 2-propanol is particularly preferred.

### Blocked urethane prepolymer

The blocked urethane prepolymer of the present invention may be produced by the following methods (1) and (2) :
(1) A method of reacting a linear urethane prepolymer having isocyanate groups with an aliphatic monoalcohol (A) having a hydroxyl number of from 200 to 560 and a blocking agent (B) which is a compound other than (A).
(2) A method of reacting a linear urethane prepolymer having isocyanate groups with a low molecular weight diol having a hydroxyl number of higher than 400, an aliphatic monoalcohol (A) having a hydroxyl number of from 200 to 560, and a blocking agent (B) which is a compound other than (A).
   In the methods (1) and (2), it is preferred to charge and react the reactants so that the total amount of the hydroxyl groups and the reactive groups in the blocking agent (hereinafter referred to as "reactive groups and hydroxyl groups"), is at least 0.8 mol, per mol of the isocyanate groups in the linear urethane prepolymer having isocyanate groups. It is particularly preferred to charge and react them so that "reactive groups and hydroxyl groups" per mol of the isocyanate groups of the urethane prepolymer is from 0.8 mol to 1.5 mol (particularly from 0.9 mol to 1.4 mol).
   Further, the linear urethane prepolymer having isocyanate groups may be produced by the following method (3) or (4).
(3) A method of reacting an organic diisocyanate with a high molecular weight diol having a hydroxyl number of from 40 to 400, so that the isocyanate groups are in excess to hydroxyl groups.
(4) A method of reacting an organic diisocyanate with a high molecular weight diol having a hydroxyl number of from 40 to 400 and a low molecular weight diol having a hydroxyl number of higher than 400, so that the isocyanate groups are in excess to hydroxyl groups.
   The reactive hot melt adhesive of the present invention containing, as the main component, a blocked urethane prepolymer, is preferably produced particularly by the following methods (5) to (7). In order to obtain the blocked urethane prepolymer having a preferred viscosity, the method (7) is particularly preferred.
(5) A method wherein an organic diisocyanate and a high molecular weight diol having a hydroxyl number of from 40 to 400 are reacted so that the isocyanate groups are from more than 1 mol to 2 mol (preferably, from more than 1 mol to 1.5 mol, particularly preferably from more than 1 mol to 1.3 mol), per mol of the hydroxyl groups, to obtain a linear urethane prepolymer having isocyanate groups, which is then reacted with an aliphatic monoalcohol (A) having a hydroxyl number of from 200 to 560 and a blocking agent (B).
   Here, the proportion of the monoalcohol (A) is from 0.005 mol to 0.5 mol (more preferably from 0.01 mol to 0.2 mol) per mol of isocyanate groups of the organic diisocyanate. The proportion of the blocking agent (B) is preferably such that the blocking agent (B) is at least 0.01 mol and less than 1.0 (more preferably from 0.1 mol to 0.5 mol) per mol of isocyanate groups of the organic diisocyanate.
(6) A method wherein an organic diisocyanate, a high molecular weight diol having a hydroxyl number of from 40 to 400 and a low molecular weight diol having a hydroxyl number of higher than 400 are reacted so that the isocyanate groups are from more than 1 mol to 2 mol (preferably from more than 1 mol to 1.5 mol, more preferably from more than 1 mol to 1.3 mol), per mol of the hydroxyl groups, to obtain a linear urethane prepolymer having isocyanate groups, which is then reacted with an aliphatic monoalcohol (A) having a hydroxyl number of from 200 to 560 and a blocking agent (B).
   Here, the proportion of the monoalcohol (A) is preferably such that the monoalcohol (A) is from 0.005 mol to 0.5 mol (more preferably from 0.01 mol to 0.2 mol) per mol of isocyanate groups of the organic diisocyanate. The proportion of the blocking agent (B) is preferably such that the blocking agent (B) is at least 0.01 mol and less than 1.0 (more preferably from 0.1 mol to 0.5 mol) per mol of isocyanate groups of the organic diisocyanate.
   Further, the proportions of the high molecular weight diol having a hydroxyl number of from 40 to 400 and the low molecular weight diol having a hydroxyl number of higher than 400, are preferably such that the low molecular weight diol is from 0.6 mol to 1.5 mol (more preferably from 0.7 mol to 1.2 mol) per mol of the high molecular weight diol.
(7) A method wherein an organic diisocyanate and a high molecular weight diol having a hydroxyl number of from 40 to 400 are reacted so that the isocyanate groups are from more than 1 mol to 3 mol, preferably, from 1.5 mol to 2.5 mol per mol of the hydroxyl groups, to obtain a linear urethane prepolymer having isocyanate groups. Then, the obtained urethane prepolymer is reacted simultaneously with from 0.3 mol to less than 1 mol (preferably from 0.3 mol to 0.6 mol) of a low molecular weight diol having a hydroxyl number of higher than 400, per mol of the isocyanate groups based on the organic diisocyanate, an aliphatic monoalcohol (A) having a hydroxyl number of from 200 to 560 and a blocking agent (B).

The proportions of the high molecular weight diol having a hydroxyl number of from 40 to 400 and the low molecular weight diol having a hydroxyl number of higher than 400 are preferably such that the low molecular weight diol is from 0.6 mol to 1.5 mol (more preferably from 0.7 mol to 1.2 mol) per mol of the high molecular weight diol.

Further, the proportion of the monoalcohol (A) is preferably such that the monoalcohol (A) is from 0.005 mol to 0.3 mol (more preferably from 0.01 mol to 0.2 mol) per mol of isocyanate groups of the organic diisocyanate. Further, the proportion of the blocking agent is preferably from 0.01 mol to less than 1.0 (more preferably from 0.1 mol to 0.5 mol) per mol of isocyanate groups of the organic diisocyanate.

The blocking reaction can be carried out either in a solvent or without a solvent. In a case where it is carried out in a solvent, it is preferred to use a solvent having no active hydrogen. Further, in a case where a solvent is used, the solvent is preferably removed after the blocked urethane prepolymer is produced. In the present invention, it is preferred not to use a solvent.

The blocked urethane prepolymer in the present invention preferably has a number average molecular weight of at least 11000 and a melt viscosity at a temperature of 110°C of at least 1000 poise. And, it is solid at room temperature.

If the number average molecular weight is less than 11,000, the normal molding processing such as extrusion molding tends to be difficult. The number average molecular weight is preferably at least 15000, particularly preferably at least 20000. Further, at most 100000 is preferred, at most 50000 is more preferred, and at most 30000 is particularly preferred.

If the melt viscosity at a temperature of 110°C is less than 1000 poise, the normal molding processing such as extrusion molding tends to be difficult. The melt viscosity at a temperature of 110°C is preferably at least 5000 poise, more preferably at least 15000 poise, and particularly preferably at least 20000 poise. Further, at most 100000 poise is preferred, at most 75000 poise is more preferred, and at most 50000 poise is particularly preferred.

### Reactive hot melt adhesive

The reactive hot melt adhesive of the present invention contains the blocked urethane prepolymer as the main component. The reactive hot melt adhesive in the present invention has a feature that it can be formed into a predetermined shape.

Namely, the reactive hot melt adhesive of the present invention is preferably used as a formed hot melt adhesive, which is formed by forming the blocked urethane prepolymer or a composition containing the blocked urethane prepolymer into a predetermined shape.

With regard to the shape, it is preferred to form it into a film shape, a tape shape, a tube shape, a bead shape, a powder shape or a flake shape. Particularly, it is preferred to form it into a film shape or a tape shape.

The forming is preferably carried out by extrusion molding. Namely, it is preferred to use as a reactive hot melt adhesive, which is formed by extrusion molding of the blocked urethane prepolymer or a composition containing the blocked urethane prepolymer, at a temperature lower than the dissociation temperature of the blocking agent. By the extrusion molding, it is easy to form it into a film shape or a tape shape.

When the extrusion molding is carried out, the molding temperature depends on the dissociation temperature of the blocking agent (hereinafter referred to as the block dissociation temperature). However, it is usually preferably from 80 to 250°C, more preferably from 80 to 200°C, particularly preferably from 80 to 150°C. The molding temperature is preferably lower than the block dissociation temperature by at least 20°C.

The reactive hot melt adhesive of the present invention may be one which is prepared by blending various additives to the blocked prepolymer. As the additives, those which are commonly used for moisture curable urethane adhesives, such as a curing catalyst, a dissociation catalyst, a plasticizer, a tackifier, various fillers, pigments, wax and a storage-stabilizer, may be mentioned.

The reactive hot melt adhesion can be used as a hot melt adhesion by carrying out the block dissociation by a usual method. Namely, by heating the adhesive at a predetermined temperature in a predetermined time, the blocking agent is taken off, moisture crosslinking occurs, and bonding property is exhibited. The heating temperature is a temperature higher than the block dissociation temperature. The heating temperature depends on the heating time, but it is preferably from 100 to 300°C, more preferably from 100 to 250°C, particularly preferably from 150 to 230°C.

The reactive hot melt adhesive of the present invention can be stored in the state of before the block dissociation. For example, it can be stored for six months. Further, under a dry state, it can be stored for from 2 to 3 years.

The reactive hot melt adhesive of the present invention can be applied to all adherends which can be bonded by a usual polyurethane adhesive.

The reactive hot melt adhesive of the present invention is an adhesive having a wide range of applications. For example, as it can be formed into a film shape, it shows an excellent aptitude for an application wherein accuracy in thickness of the adhesive is of importance, or an application wherein too much infiltration to the adherend is problematic.

As specific applications, it can be applied for bonding for e.g. automobiles, building materials, carpenter furniture, bookbinding, electric products, cloth·fabrics. It exhibits excellent effects for applications wherein lack of heat resistance is problematic with a conventional hot melt type adhesive, or applications wherein lack of adhesion becomes a problem.

The fields wherein lack of heat resistance is problematic include e.g. bonding of interior parts of an automobile, and bonding of a sheet and a foam body. Further, it is effective for bonding of a product which requires a heating step after bonding.

Further, it is suitable for bonding of cloth·fabric as it is excellent in flexibility, and it is particularly preferred to be used for e.g. a sealing tape for seam portions in which lack of adhesion is pointed out, bonding interlining, a tape for fastening lower ends of trousers, or a Wappen, as it shows an excellent adhesion without impairing the feeling of the cloth.

Further, the reactive hot melt adhesive of the present invention is advantageous also from the viewpoint of the working environment for the use of the adhesive, since the amount of a hazardous polyisocyanate discharged in the atmosphere during the heat melting is limited.

The reactive hot melt adhesive of the present invention is particularly preferred to be used as laminated with a moisture permeable waterproof sheet. Namely, the present invention is an adhesive composite sheet or tape material which is a laminate made by laminating an adhesive layer made of the above-mentioned reactive hot melt adhesive of the present invention on a moisture permeable waterproof sheet.

The moisture permeable waterproof sheet is preferably one excellent in thermal stability and is preferably made of a laminate containing, as a constituting component, a film or sheet made of a microporous polytetrafluoroethylene or a microporous (ethylene/tetrafluoroethylene) copolymer.

Further, the adhesive composite sheet or tape material is particularly preferably used as a material for sealing a seam portion of a sewn product made of a moisture permeable waterproof sheet, or for sealing a mending portion of a sewn product made of a moisture permeable waterproof sheet. The adhesive composite sheet or tape material can be used in the shape of a tape or a patch material by means of e.g. cutting. Here, specific examples of the sewn product may, for example, be clothings including suits, trousers, coats and shirts, head-gears including masks, hoods and hats, shoes including boots and overshoes or gloves including mittens and gloves.

The lamination is preferably carried out by putting together the moisture permeable waterproof cloth and a film of the adhesive which has been preliminarily formed into a film. At the time of the lamination, it is preferred to employ rolls heated at a temperature of from about 50 to 100°C to obtain good adhesion.

Otherwise, when the adhesive is extrusion-molded into a film, it may be extruded on the moisture permeable waterproof sheet for lamination. In a case where the moisture permeable waterproof sheet is thermoplastic, it may be co-extruded with a film of the adhesive for lamination.

The above-mentioned composite sheet material is cut into a desired shape, such as a tape shape, depending upon the particular use.

When the above-mentioned composite sheet or tape material is employed, it is necessary to heat it at a temperature of at least the block dissociation temperature for a predetermined time. However, even when melt bonding is carried out at a lower temperature, an adequate bond strength can be obtained by carrying out wet heat treatment.

### EXAMPLES

### EXAMPLE 1

100 Parts by weight (hereinafter referred to as "parts" for short) of polyester diol having a hydroxyl number of 110, made by a reaction of adipic acid, ethylene glycol and 1,4-butane diol, and 55.0 parts of 4,4'-diphenyl methane diisocyanate were reacted at a temperature of 80°C for 2 hours, to obtain a urethane prepolymer having isocyanate groups at the ends. Then, 7.9 parts of 1,4-butane diol (hydroxyl number: 1245), and 6.2 parts of ε -caprolactam and 2.4 parts of n-octyl alcohol, as blocking agents, were added thereto, and the mixture was reacted at a temperature of 120°C for 4 hours, to obtain a blocked urethane prepolymer (block dissociation temperature: 170°C). Here, in each Example given hereinafter, the end point of the reaction was confirmed by disappearance of the absorption of isocyanate groups in the IR spectrum.

The obtained blocked urethane prepolymer was crushed into a flake shape by a mill, then the flake-shaped resin composition was formed into a film shape having a thickness of 100 µm by extrusion molding, by using a extrusion molding device at a die temperature of 125°C, to obtain a film-shaped resin composition.

### EXAMPLE 2

100 Parts of polyoxytetramethylene glycol having a hydroxyl number of 110, and 59.2 parts of 4,4'-diphenyl methane diisocyanate were reacted at a temperature of 80°C for 2 hours, to obtain a urethane prepolymer having isocyanate groups at the ends. Then, 9.2 parts of 1,4-butane diol, and 6.7 parts of ε -caprolactam and 2.6 parts of n-octyl alcohol, as blocking agents were added thereto, and the mixture was reacted at a temperature of 120°C for 4 hours, to obtain a blocked urethane prepolymer (block dissociation temperature: 170°C). The obtained blocked urethane prepolymer was formed in the same manner as in Example 1, to obtain a film-shaped resin composition.

### EXAMPLE 3

100 Parts of polyester diol having a hydroxyl number of 110, made by a reaction of adipic acid, ethylene glycol and 1,4-butane diol, and 55.0 parts of 4,4'-diphenyl methane diisocyanate were reacted at a temperature of 80°C for 2 hours, to obtain a urethane prepolymer having isocyanate groups at the ends. Then, 7.9 parts of 1,4-butane diol, and 4.8 parts of methyl ethyl ketone oxime and 2.4 parts of n-octyl alcohol, as blocking agents, were added thereto, and the mixture was reacted at a temperature of 120°C for 4 hours, to obtain a blocked urethane prepolymer (block dissociation temperature: 145°C). The obtained blocked urethane prepolymer was formed in the same manner as in Example 1, to obtain a film-shaped resin composition.

### EXAMPLE 4

100 Parts of polyester diol having a hydroxyl number of 110, made by a reaction of adipic acid, ethylene glycol and 1,4-butane diol, and 55.0 parts of 4,4'-diphenyl methane diisocyanate were reacted at a temperature of 80°C for 2 hours, to obtain a urethane prepolymer having isocyanate groups at the ends. Then, 7.9 parts of 1,4-butane diol, and 3.2 parts of methyl ethyl ketone oxime and 4.8 parts of n-octyl alcohol, as blocking agents, were added thereto, and the mixture was reacted at a temperature of 120°C for 4 hours, to obtain a blocked urethane prepolymer (block dissociation temperature: 145°C). The obtained blocked urethane prepolymer was formed in the same manner as in Example 1, to obtain a film-shaped resin composition.

### EXAMPLE 5

100 Parts of polyester diol having a hydroxyl number of 110, made by a reaction of adipic acid, ethylene glycol and 1,4-butane diol, and 55.0 parts of 4,4'-diphenyl methane diisocyanate were reacted at a temperature of 80°C for 2 hours, to obtain a urethane prepolymer having isocyanate groups at the ends. Then, 7.9 parts of 1,4-butane diol, and 4.0 parts of methyl ethyl ketone oxime and 3.6 parts of n-octyl alcohol, as blocking agents, were added thereto, and the mixture was reacted at a temperature of 120°C for 4 hours, to obtain a blocked urethane prepolymer (block dissociation temperature: 145°C). The obtained blocked urethane prepolymer was formed in the same manner as in Example 1, to obtain a film-shaped resin composition.

### EXAMPLE 6 (COMPARATIVE EXAMPLE 1)

100 Parts of polyester diol having a hydroxyl number of 110, made by a reaction of adipic acid, ethylene glycol and 1,4-butane diol, and 55.0 parts of 4,4'-diphenyl methane diisocyanate were reacted at a temperature of 80°C for 2 hours, to obtain a urethane prepolymer having isocyanate groups at the ends. Then, 7.9 parts of 1,4-butane diol, and 6.4 parts of methyl ethyl ketone oxime as a blocking agent, were added thereto, and the mixture was reacted at a temperature of 120°C for 4 hours, to obtain a blocked urethane prepolymer (block dissociation temperature: 145°C). The obtained blocked urethane prepolymer was formed in the same manner as in Example 1, to obtain a film-shaped resin composition.

### EXAMPLE 7 (COMPARATIVE EXAMPLE 2)

100 Parts of polyester diol having a hydroxyl number of 110, made by a reaction of adipic acid and 1,4-butane diol, and 55.0 parts of 4,4'-diphenyl methane diisocyanate were reacted at a temperature of 80°C for 2 hours, to obtain a urethane prepolymer having isocyanate groups at the ends. Then, 10.93 parts of 1,4-butane diol, was added thereto, and the mixture was reacted at a temperature of 120°C for 4 hours, to obtain a urethane prepolymer. The obtained urethane prepolymer was formed in the same manner as in Example 1, to obtain a film-shaped resin composition.

### EVALUATION

With the film-shaped resin compositions obtained in Examples 1 to 7, the following tests (1) to (4) were carried out.
(1) Test on the physical properties of the films
   The physical properties at room temperature of the obtained film-shaped resin compositions, i.e. the extension (unit: %), the 100% modulus M₁₀₀ (unit: kg/cm²) and the tensile strength Tₛ (unit: kg/cm²) were measured at a pulling rate of 300 inn/mm.
   Further, the blocking agent was dissociated under heating at 200°C for 3 minutes, and then curing was conducted for 6 days at a temperature of 20°C under a relative humidity of 60%, and then the physical properties at room temperature were measured in the same manner. However, in Example 7, no blocking agent was used, and no heating for dissociation was carried out.
   The results are shown in Table 1.
(2) Test on peel strength
   The obtained film-shaped resin composition was sandwiched between two adherends and heated at a temperature of 190°C for 30 seconds on a hot plate, while exerting a pressure of 0.22 kg/cm². The curing was conducted for 6 days at a temperature of 20°C under a relative humidity of 60% to obtain a laminate. The peel strength (unit: kg/inch) at room temperature of this laminate was measured under a condition of a peeling rate of 200 mm/min. As the adherends, polyester taffeta, nylon taffeta and cotton broad were used. The results are shown in Table 2.
(3) Test for measurement of the concentration of a polyisocyanate discharge in the atmosphere
   The obtained film-shaped resin composition was cut with a width of 2 cm and laminated on a nylon taffeta by means of a roll laminator heated to 230°C. During the lamination step, the concentration of a polyisocyanate was measured at a position distanced by 12.5 cm from the sample, without using a local ventilation system. The results are shown in Table 3.
(4) Preparation of an adhesive composite sheet

A film-shaped resin composition obtained in Examples 1 to 7 and a polyurethane sheet (thickness: 100 µm) having a melting point of at least 250°C, were overlaid and press-bonded by means of hot rolls heated to 80°C, to obtain an adhesive composite sheet. The obtained adhesive composite sheet material was cut into a tape with a width of 2.5 cm, which was used for the following test.

As a moisture permeable waterproof sheet, a laminate of a microporous polytetrafluoroethylene film with a cloth, sold as Gore-tex fabric, was used. Two such moisture permeable waterproof sheets were put together so that the microporous polytetrafluoroethylene film sides faced each other and sewn by a sewing machine with a margin to sew up of 1 cm, to obtain a sewn product sample. Then, as shown in Figure 1, the margin to sew up was spread, and the tape-shaped adhesive composite sheet material was hot-pressed on the seam portion by means of an iron, to obtain a sealed sample.

From the cloth side of this sealed sample, a water head pressure of 2000 mm was exerted for 2 minutes to carry out a water leakage test, and after confirming that no leakage of water was observed, a washing test in accordance with JIS L1096 6.23A method (however, no cleaning agent was used, and the drying method was drip drying) was repeated for 10 times. After drying, the water leakage test was carried out again, whereby one with which no leakage was observed, was rated as "passed". In each Example, five such sealed samples were prepared, and the test was carried out on each of them. The number of "passed" is shown in Table 4.

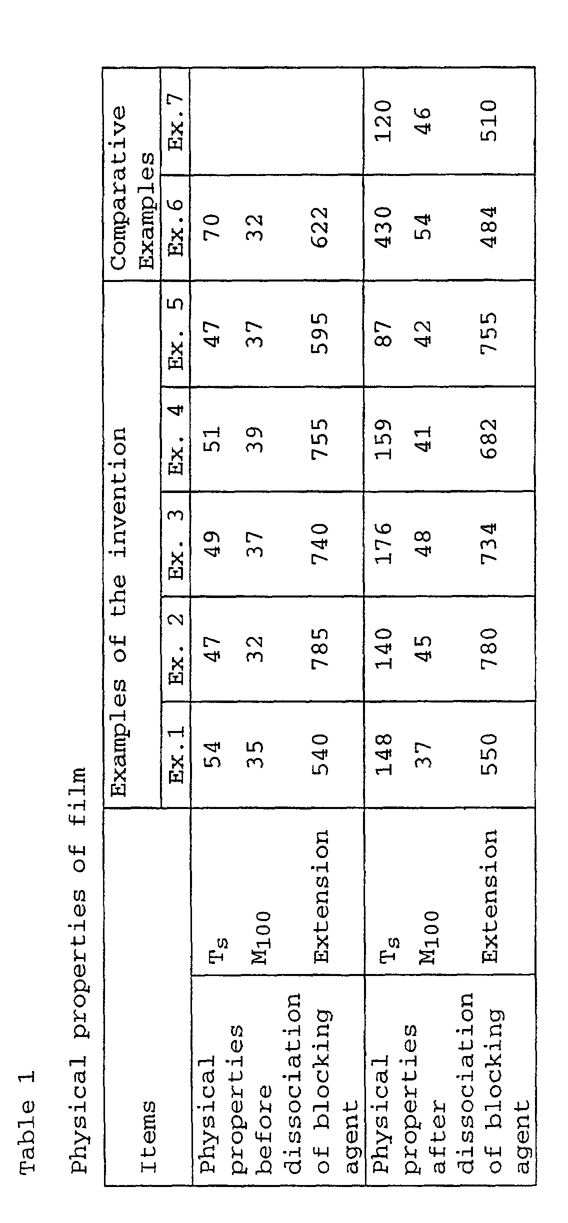

**Table 2**

| Peel strength | | | | | | | |
|---|---|---|---|---|---|---|---|
| Adherend | Examples of the present invention | | | | | Comparative Examples | |
| | Ex.1 | Ex.2 | Ex.3 | Ex.4 | Ex.5 | Ex.6 | Ex.7 |
| Polyester | 2.2 | 1.5 | 1.9 | 1.7 | 1.8 | 2.2 | 1.5 |
| Nylon | 4.1 | 2.8 | 3.6 | 3.9 | 3.8 | 4.7 | 2.2 |
| Cotton | 5.2 | 3.8 | 4.4 | 4.0 | 4.2 | 6.5 | 3.6 |

**Table 3**

| Measurement of the amount of isocyanate discharged in the atmosphere | | | | | | | |
|---|---|---|---|---|---|---|---|
| | Examples of the present invention | | | | | Comparative Examples | |
| | Ex.1 | Ex.2 | Ex.3 | Ex.4 | Ex.5 | Ex.6 | Ex.7 |
| Discharged amount of MDI | 4 ppb | 4 ppb | 3 ppb | 2 ppb | 4 ppb | 15 ppb | <1 ppb |

**Table 4**

| Test on repeated washing | | | | | | | |
|---|---|---|---|---|---|---|---|
| | Examples of the present invention | | | | | Comparative Examples | |
| | Ex.1 | Ex.2 | Ex.3 | Ex.4 | Ex.5 | Ex.6 | Ex.7 |
| Leakage test results | 4 | 3 | 5 | 5 | 5 | 5 | 2 |

### INDUSTRIAL APPLICABILITY

The reactive hot melt adhesive of the present invention is excellent in storage stability, initial bonding property and heat resistance after bonding and curing. Further, it is capable of suppressing discharge of a polyisocyanate into the atmosphere during the use, and it is possible to improve the working environment. Further, it is easy to make the thickness of the adhesive layer uniform and to preliminarily process it into a required shape depending upon the particular application, and the process at the work site can be simplified. It can be used also in a case where too much infiltration of an adhesive component into an adherend tends to be a problem.

## Claims

1. A reactive hot melt adhesive containing, as the main component, a blocked urethane prepolymer made by reacting a linear urethane prepolymer having isocyanate groups with an aliphatic monoalcohol (A) having a hydroxyl number of from 200 to 560 and a blocking agent (B) which is a compound other than (A).

2. A reactive hot melt adhesive containing, as the main component, a blocked urethane prepolymer made by reacting a linear urethane prepolymer having isocyanate groups with a low molecular weight diol having a hydroxyl number of higher than 400, an aliphatic monoalcohol (A) having a hydroxyl number of from 200 to 560 and a blocking agent (B) which is a compound other than (A).

3. The reactive hot melt adhesive according to Claim 1 or 2, wherein the linear urethane prepolymer having isocyanate groups is one obtained by reacting an organic diisocyanate and a high molecular weight diol having a hydroxyl number of from 40 to 400, so that isocyanate groups are in excess to hydroxyl groups.

4. The reactive hot melt adhesive according to Claim 1 or 2, wherein the linear urethane prepolymer having isocyanate groups is one obtained by reacting an organic diisocyanate, a high molecular weight diol having a hydroxyl number of from 40 to 400 and a low molecular weight diol having a hydroxyl number of higher than 400, so that isocyanate groups are in excess to hydroxyl groups.

5. The reactive hot melt adhesive according to Claim 1, 2, 3 or 4, which is formed by forming the blocked urethane prepolymer or a composition containing the blocked urethane prepolymer into a predetermined shape.

6. The formed reactive hot melt adhesive according to Claim 5, wherein the shape is a film shape, a tape shape, a tube shape, a bead shape, a powder shape or a flake shape.

7. The formed reactive hot melt adhesive according to Claim 5 or 6, wherein the forming is extrusion molding.

8. The formed reactive hot melt adhesive according to Claim 5, 6 or 7, which is formed by extrusion molding at a temperature lower than the dissociation temperature of the blocking agent.

9. An adhesive composite sheet or tape material, which is a laminate made by laminating an adhesive layer made of the reactive hot melt adhesive as defined in any one of Claims 1 to 8 on a moisture permeable waterproof sheet.

10. The adhesive composite sheet or tape material according to Claim 9, wherein the moisture permeable waterproof sheet is a laminate containing, as a constituting component, a film or sheet made of a microporous polytetrafluoroethylene or a microporous (ethylene/tetrafluoroethylene) copolymer.

11. A method of using the adhesive composite sheet or tape material as defined in Claim 9 or 10, for a material for sealing a seam portion of a sewn product made of a moisture permeable waterproof sheet, or for sealing a mending portion of a sewn product made of a moisture permeable waterproof sheet.

12. A sewn product wherein the adhesive composite sheet or tape material as defined in Claim 9 or 10 is used as a material for sealing a seam portion or a mending portion.
